(19) Europäisches Patentamt
European Patent Office
Office européen des brevets

(11) Publication number: 0 368 677 A2

# (12) EUROPEAN PATENT APPLICATION

(21) Application number: 89311683.0

(22) Date of filing: 10.11.89

(51) Int. Cl.5: C08F 297/08, //(C08F297/08, 210:06,210:02)

(30) Priority: 11.11.88 JP 285539/88

(43) Date of publication of application: 16.05.90 Bulletin 90/20

(84) Designated Contracting States: DE FR GB NL

(71) Applicant: MITSUBISHI PETROCHEMICAL CO., LTD.
5-2, Marunouchi 2-chome
Chiyoda-ku Tokyo(JP)

(72) Inventor: Matsuura, Mituyuki Mitsubishi Petrochem. Co., Ltd.
Yokkaichi Sogo Kenkyusho 1Toho-Cho
Yokkaichi-Shi Mie-Ken(JP)
Inventor: Sugano, Toshihiko Mitsubishi Petrochem. Co., Ltd.
Yokkaichi Sogo Kenkyusho 1Toho-Cho
Yokkaichi-Shi Mie-Ken(JP)
Inventor: Nakamura, Kazuo Mitsubishi Petrochem. Co., Ltd.
Yokkaichi Sogo Kenkyusho1 Toho-Cho
Yokkaichi-Shi Mie-Ken(JP)

(74) Representative: Kyle, Diana et al
ELKINGTON AND FIFE Beacon House 113 Kingsway
London WC2B 6PP(GB)

## (54) Process for producing propylene block copolymer.

(57) Block copolymers of propylene with ethylene is produced by two-step polymerization comprising polymerization of propylene in a first step and subsequent polymerization of propylene with ethylene in a second step. The catalyst and the polymerization conditions or particulars are specified, and the characteristics, among others, is use of n-butyllithium at the second step.

EP 0 368 677 A2

# PROCESS FOR PRODUCING PROPYLENE BLOCK COPOLYMER

This invention relates to a process for producing propylene block copolymers having high rigidity and high impact strength with good powder flowability.

Crystalline polypropylene, while having excellent characteristics of rigidity and heat resistance, had on the other hand the problem of low impact strength, particularly low impact strength at a low temperature.

As the method for improving this point, there have been already known a method of forming a block copolymer by polymerizing stepwise propylene and ethylene or another olefin (Japanese Patent Publications Nos. 11230/1968, 16668/1969, 20621/1969, 24593/1974, 30264/1974, Japanese Laid-open Patent Publications Nos. 25781/1973, 115296/1975, 35789/1978 and 110072/1979).

However, when propylene and ethylene are polymerized in two stages or multiple stages, although impact resistance may be improved, there ensues on the other hand the problem that polymers of low crystallinity are formed in a large amount, because the product contains copolymer portions.

Also, for improvement of impact strength of a block copolymer, it has been generally practiced to increase an amount of a rubbery copolymer formed in the block copolymerization. However, formation of by-products may be increased, and the polymer particles tend to have increased tackiness with the increase of rubbery copolymers, whereby sticking between polymer particles or sticking of the polymer particles onto the device inner wall may occur, whereby it becomes frequently difficult to perform stable running of a polymer production device for a long term.

Furthermore, the block copolymers produced are such that the molecular weight of the copolymer portions is low and the molecular weight distribution of the block copolymers is narrow whereby poor processability is entailed.

Proposals have heretofore -been known for solving these problems found in a two step or multi-step polymerization such as use of an electron donor in a restricted group in the former step or the later step of the polymerization. See Japanese Patent Laid-Open Publication Nos. 151713/1981; 59139/1985; 69821/1986; 69822/1986; 69823/1986 and 43915/1988. The use of an electron donor proposed may, as long as the present inventors are concerned, have succeeded only to some degree in improvement in reducing the quantity of by-products and in improving processability, which improvement may, in turn, have entailed lowered catalytic activity and/or considerable quantity of the additive leading to increase in production cost.

Modification of the technology where a certain additive is used in the polymerization steps as referred to above such as use of an alkyllithium or an alkylmagnesium in the polymerization which is conducted in a vapor phase, has also been proposed in Japanese Patent Laid-Open Nos. 132912/1987; and 135509/1987. These methods proposed, however, may not appear to the present inventors to be preferable in view of the quantity of the additive being relatively high and of the polymerization temperature used in the second polymerization being low.

The present inventors have studied intensively in order to solve the problems as mentioned above, and consequently found that the above problems can be solved by use of a specific organometal compound whereby the present invention has been obtained.

More specifically, the present invention presents an improved process for producing a propylene block copolymer wherein propylene and ethylene are polymerized in multiple steps over a Ziegler type catalyst comprising a Component (A) and a catalyst Component (B) and optionally a catalyst Component (C), all given hereinbelow, so that a crystalline homopolymer of propylene or a copolymer of propylene with ethylene of an ethylene content of no higher than 7% by weight is produced in a former step and a copolymer of propylene with ethylene in a mole ratio of propylene to ethylene of 0/100 to 80/20 in a later step in the presence of at least a portion of the product produced in the former step, the improvement comprising use of a Component (D) given hereinbelow in the later step:

Component (A) which is a solid component comprising titanium, magnesium and a halogen as an essential components and optionally an electron donor compound;

Component (B) which is an organoaluminum compound;

Component (C) which is an electron donor compound; and

Component (D) which is an organometal compound of a metal other than aluminum in the Group I, II or III of the Periodic Table with a proviso that organometal compounds having an alkoxy group attached directly to the metal are excluded.

Polymerization of propylene together with ethylene into a block copolymer with the catalyst according to the present invention results in a propylene block copolymer having high rigidity, high impact strength and improved moldability with less by-products.

Also, according to the present invention, even when the weight of rubbery copolymer components may

become much (e.g. 30% by weight or more), tackiness of polymer particles is little, and therefore the trouble in running operation which has been a problem in the prior art can be solved.

[Catalyst]

The catalyst of the present invention comprises a combination of specific components (A), (B), an optional component (C), and a component (D). Here, the wording "comprises" does not mean that the components are limited only to those mentioned (namely, A, B, C and D), and does not exclude co-presence of other components compatible with or suited for the use of the component (D) in accordance with the present invention. The component (C) is optional in that it may be used when a crystalline homopolymer or a copolymer is not obtainable without the component (C).

Component (A)

The component (A) of the catalyst of the present invention is a solid component comprising titanium, magnesium and a halogen as the essential components. Here, the wording "comprising X as the essential components" indicates that it can also contain other elements suited for the purpose than the three components mentioned, that these elements can exist in any desired compound suited for the purpose respectively, and also that these elements can also exist in the form mutually bonded together. Solid components comprising titanium, magnesium and a halogen are known *per se*. For example, those as disclosed in Japanese Laid-open Patent Publications Nos. 45688/1978, 3894/1979, 31092/1979, 39483/1979, 94591/1979, 118484/1979, 131589/1979, 75411/1980, 90510/1980, 90511/1980, 127405/1980, 147507/1980, 155003/1980, 18609/1981, 70005/1981 72001/1981, 86905/1981, 90807/1981, 155206/1981, 3803/1982, 34103/1982, 92007/1982, 121003/1982, 5309/1983, 5310/1983, 5311/1983, 8706/1983, 27732/1983, 32604/1983, 32605/1983, 67703/1983, 117206/1983, 127708/1983, 183708/1983, 183709/1983, 149905/1984 and 149906/1984 may be employed.

As the magnesium compound which is the magnesium source to be used in the present invention, magnesium dihalides, dialkoxymagnesiums, alkoxymagnesium halides, magnesium oxyhalides, dialkylmagnesiums, magnesium oxide, magnesium hydroxide, carboxylates of magensium, etc. are exemplified. Among these magnesium compounds, magnesium dihalides, dialkoxymagnesiums and alkoxymagnesium halides wherein the alkyl moiety is a lower alkyl of e.g. 1 to 4 carbon atoms, particularly $MgCl_2$, are preferred.

As the titanium compound which is the titanium source, compounds represented by the formula $Ti(OR^4)_{4-n}X_n$ (wherein $R^4$ is a hydrocarbyl group, preferably having about 1 to 10 carbon atoms, X represents a halogen atom and n is an integer of $0 \leq n \leq 4$) and polymers of a titanium tetraalkoxide. Specific examples may include:

titanium tetrahalides such as $TiCl_4$, $TiBr_4$ and the like;

alkoxytitanium halides such as $Ti(OC_2H_5)Cl_3$,

$Ti(OC_2H_5)_2Cl_2$,

$Ti(OC_2H_5)_3Cl$,

$Ti(O\text{-}iC_3H_7)Cl_3$,

$Ti(O\text{-}nC_4H_9)Cl_3$,

$Ti(O\text{-}nC_4H_9)_2Cl_2$,

$Ti(OC_2H_5)Br_3$,

$Ti(OC_2H_5)(OC_4H_9)_2Cl$,

$Ti(O\text{-}nC_4H_9)_3Cl$,

$Ti(O\text{-}C_6H_5)Cl_3$,

$Ti(O\text{-}iC_4H_9)_2Cl_2$,

$Ti(OC_5H_{11})Cl_3$,

$Ti(OC_6H_{13})Cl_3$, and the like;

and titanium tetraalkoxides such as

$Ti(OC_2H_5)_4$,

$Ti(O\text{-}iC_3H_7)_4$,

$Ti(O\text{-}nC_3H_7)_4$,

$Ti(O\text{-}nC_4H_9)_4$,
$Ti(O\text{-}iC_4H_9)_4$,
$Ti(O\text{-}nC_5H_{11})_4$,
$Ti(O\text{-}nC_6H_{13})_4$,
$Ti(O\text{-}nC_7H_{15})_4$,
$Ti(O\text{-}nC_8H_{17})_4$,
$Ti(OCH_2CH(CH_3)_2]_4$,
$Ti[OCH_2CH(C_2H_5)C_4H_9]_4$, and the like. $TiCl_4$, $Ti(OEt)_4$, $Ti(OBu)_4$, and $Ti(OBu)Cl_3$.

Polymers of a titanium tetraalkoxide may include those represented by the following formula:

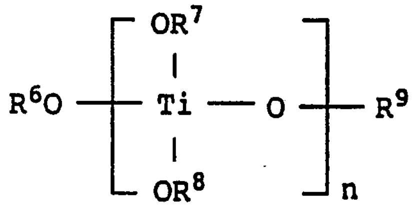

Here, $R^6$ - $R^9$ represent the same or different hydrocarbyl groups, preferably aliphatic hydrocarbyl group having 1 to 10 carbon atoms or aromatic hydrocarbyl groups, particularly aliphatic hydrocarbyl groups having 2 to 6 carbon atoms. n represents a number of 2 or more, particularly a number up to 20. The value of n should be desirably selected so that the polytitanate itself or as a solution can be provided in a liquid state for the contact step with other components. A suitable n selected in view of ease of handling may be about 2 to 14, preferably 2 to 10. Specific examples of such polytitanates may include n-butylpolytitanate (n = 2 to 10), hexylpolytitanate (n = 2 to 10), n-octylpolytitanate (n = 2 to 10), and the like. Among them, n-butylpolytitanate is preferred.

It is also possible to use, as the titanium compound for the titanium source, a molecular compound obtained by reacting an electron donor as described below with a compound $TiX'4$ (where $X'$ represents a halogen). Specific examples may include:
$TiCl_4 \cdot CH_3COC_2H_5$,
$TiCl_4 \cdot CH_3CO_2C_2H_5$,
$TiCl_4 \cdot C_6H_5NO_2$,
$TiCl_4 \cdot CH_3COCl$,
$TiCl_4 \cdot C_6H_5COCl$,
$TiCl_4 \cdot C_6H_5CO_2C_2H_5$,
$TiCl_4 \cdot ClCOC_2H_5$,
$TiCl_4 \cdot C_4H_4O$, and the like.

It is also possible to use, as the titanium compound for the titanium source, a titanocene compound, for example dicyclopentadienyldichloro titanium, dicyclopentadienyldimethyl titanium, bisindenyldichlorotitanium, and the like. Among these titanium compounds, preferable are: $TiCl_1$, $Ti(OEt)_4$, $Ti(OBu)_4$, and $Ti(OBu)Cl_3$.

As to the halogen source, it is a common practice to supply the halogen from the halide compounds of magnesium and/or titanium as described above, but it can be also supplied from non halogenating agents such as halogen compounds of aluminum, halogen compounds of silicon, halogen compounds of phosphorus, and the like.

The halogen contained in the catalyst components may be fluorine, chlorine, bromine, iodine or a mixture of these, particularly preferably chlorine.

The solid component to be used in the present invention can also include, in addition to the above essential components: a silicon compound such as $SiCl_4$, $CH_3SiCl_3$, and the like; a polymeric silicon compound having the structure represented by the following formula:

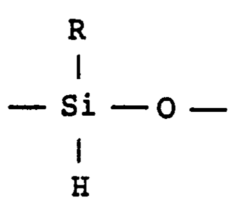

(wherein R is a hydrocarbyl group having about 1 to 10, particularly about 1 to 6 carbon atoms) and having a viscosity of about 1 centistoke to 100 centistokes, such as methylhydropolysiloxane, ethylhydropolysiloxane, phenylhydropolysiloxane, cyclohexylhydropolysiloxane, 1,1,3,3 tetramethyldisiloxane, 1,3,5,7-tetramethylcyclotetrasiloxane, 1,3,5,7,9-pentamethylcyclopentasiloxane and the like; an aluminum compound such as $Al(OiC_3H_7)_3$, $AlCl_3$, $AlBr_3$, $Al(OC_2H_5)_3$, $Al(OCH_3)_2Cl$; and a boron compound such as $B(OCH_3)_3$, $B(OC_2H_5)_3$, $B(OC_6H_5)_3$.

These optional compounds may remain in the solid component as the components of silicon, aluminum and boron.

Further, in preparing the solid component, use can also be made of an electron donor as what is called "an inside donor".

Examples of the electron donor or the inside donor which can be used for preparation of the solid component may include oxygen-containing electron donors such as alcohols, phenols, ketones, aldehydes, carboxylic acids, esters of an organic acid or an inorganic acid, ethers, acid amides, acid anhydrides, and the like; and nitrogen-containing electron donors such as ammonia, amines, nitriles, isocyanates, and the like.

More specifically, there may be included: (a) alcohols having 1 to 18 carbon atoms, such as methanol, ethanol, propanol, pentanol, hexanol, octanol, dodecanol, octadecyl alcohol, benzyl alcohol, phenylethyl alcohol, cumyl alcohol, isopropylbenzyl alcohol and the like; (b) phenols having 6 to 25 carbon atoms which may or may not have an alkyl group, such as phenol, cresol, xylenol, ethylphenol, propylphenol, cumylphenol, nonylphenol, naphthol and the like; (c) ketones having 3 to 15 carbon atoms, such as acetone, methyl ethyl ketone, methyl isobutyl ketone, acetophenone, benzophenone and the like; (d) aldehydes having 2 to 15 carbon atoms, such as acetaldehyde, propionaldehyde, octylaldehyde, benzaldehyde, tolualdehyde, naphthaldehyde and the like; (e) organic acid esters having 2 to 20 carbon atoms, such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, diethyl phthalate, dibutyl phthalate, diheptyl phthalate, $\gamma$-butyrolactone, $\alpha$-valerolactone, coumarine, phthalide, ethylene carbonate, cellosolve acetate, cellosolve isobutyrate and cellosolve benzoate, etc.; (f) inorganic acid esters, such as silicates and borate such as ethyl silicate, butyl silicate, phenyl-triethoxysilane, methyl borate, ethyl borate, phenyl borate, etc.; (g) acid halides having 2 to 15 carbon atoms, such as acetyl chloride, benzoyl chloride, toluyloic chloride, anisic chloride, phthaloyl chloride, phthaloyl isochloride and the like; (h) ethers having 2 to 20 carbon atoms, such as methyl ether, ethyl ether, isopropyl ether, butyl ether, amyl ether, tetrahydrofuran, anisole, diphenyl ether and the like; (i) acid amides, such as acetic amide, benzoic amide, toluyloic amide and the like; (j) amines, such as monomethylamine, monoethylamine, diethylamine, tributylamine, piperidine, tribenzylamine, aniline, pyridine, picoline, tetramethylethylenediamine and the like; and (k) nitriles, such as acetonitrile, benzonitrile, tolunitrile and the like. One or more of these electron donors can be used in preparing the solid catalyst component. Among them, preferred are organic acid esters, inorganic acid esters and organic acid halides, particularly preferably phthalic acid esters, silicates, phthalic acid halides and cellosolve acetate.

The amounts of the above respective components used may be at any desired level, so long as the advantages inherent in the present invention can be attained, but, generally speaking, the following ranges are preferred.

The amount of the titanium compound used may be within the range of $1 \times 10^{-4}$ to 1000, preferably 0.01 to 10, in terms of molar ratio relative to the amount of the magnesium compound used. When a compound as the halogen source is used, its amount used may be within the range of $1 \times 10^{-2}$ to 1000, preferably 0.1 to 100, in terms of a molar ratio relative to magnesium used, irrespectively of whether the titanium compound and/or the magnesium compound may contain a halogen or not.

The amount of the silicon, aluminum or boron compound used may be within the range of $1 \times 10^{-3}$ to 100, preferably 0.01 to 1, in terms of a molar ratio to the amount of the above magnesium compound used.

The amount of the electron donor compound used may be within the range of $1 \times 10^{-3}$ to 10, preferably 0.01 to 5, in terms of a molar ratio relative to the amount of the above magnesium compound used.

The solid component for preparing the component (A) may be prepared from the titanium source, the magnesium source and the halogen source, and further optionally other components such as an electron donor according to methods mentioned below.

(a) A method in which a magnesium halide optionally together with an electron donor is contacted

with a titanium compound.

(b) A method in which alumina or magnesia is treated with a phosphorus halide compound, and the product is contacted with a magnesium halide, an electron donor, and a titanium compoundc ontaining a halogen.

(c) A method in which the solid component obtained by contacting a magnesium halide with a titanium tetraalkoxide and a polymeric silicon compound is contacted with a titanium halide compound and/or a silicon halide compound.

As the polymeric silicon compound, those represented by the following formula are suitable:

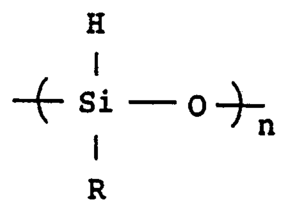

wherein R is a hydrocarbyl group having about 1 to 10 carbon atoms, n is a polymerization degree such that the viscosity of the polymeric silicon compound may be 1 to 100 centistokes.

Among them, methylhydrogenpolysiloxane, 1,3,5,7-tetramethylcyclotetrasiloxane, 1,3,5,7,9-pentamethylcyclopentacycloxane, ethylhydrogenpolysiloxane, phenylhydrogenpolysiloxane, and cyclohexylhydrogenpolysiloxane are preferred.

(d) A method in which a magnesium compound is dissolved in a titanium tetraalkoxide and an electron donor, and the solid component precipitated from the solution upon addition thereto of a halogenating agent or a titanium halide compound is contacted with a titanium compound.

(e) A method in which an organomagnesium compound such as Grignard reagent, etc. is reacted with a halogenating agent, a reducing agent, etc., and then the reaction product is contacted with an electron donor and a titanium compound.

(f) A method in which an alkoxy magnesium compound is contacted with a halogenating agent and/or a titanium compound in the presence or absence of an electron donor.

(g) A method in which a magnesium dihalide and a titanium tetraalkoxide and/or a polymer thereof are contacted, and subsequently contacted with a polymeric silicon compound is contacted.

Contact of the three components can be effected in the presence of a dispersing medium. As the dispersing medium in that case, hydrocarbons, halogenated hydrocarbons, dialkylsiloxanes, etc. may be exemplified.

Examples of hydrocarbons may include hexane, heptane, toluene, cyclohexane and the like; examples of halogenated hydrocarbons include n-butyl chloride, 1,2-dichloroethylene, carbon tetrachloride, chlorobenzene, etc.; and examples of dialkylpolysiloxane include dimethylpolysiloxane, methylphenylpolysiloxane and the like.

## Component (B)

The component (B) is an organoaluminum compound. Specific examples may include those represented by $R^7{}_{3-n}AlX_n$ or $R^8{}_{3-m}Al(OR^9)_m$ (wherein $R^7$ and $R^8$, which may be the same or different, are each hydrocarbyl groups having about 1 to 20 carbon atoms or hydrogen atom, $R^9$ is a hydrocarbyl group, X is a halogen atom, n and m are respectively numbers of $0 \leq n < 3$, $0 < m < 3$).

Specifically, there may be included (a) trialkylaluminums such as trimethylaluminum, triethylaluminum, triisobutylaluminum, trihexylaluminum, trioctylaluminum, tridecylaluminum, and the like; (b) alkylaluminum halides such as diethylaluminum monochloride, diisobutylaluminum monochloride, ethylaluminum sesquichloride, ethylaluminum dichloride, and the like; (c) dialkylaluminum hydrides such as diethylaluminum hydride, diisobutylaluminum hydride and the like; (d) aluminum alkoxides such as diethylaluminum ethoxide, diethylaluminum phenoxide, and the like.

The organoaluminum compounds of (a) to (c) can be used in combination with alkylaluminum alkoxides, such as, for example, alkylaluminum alkoxides represented by the formula: $R^{10}{}_{3-a}Al(OR^{11})_a$ (wherein $1 \leq a \leq 3$, $R^{10}$ and $R^{11}$, which may be either the same or different, are each hydrocarbyl groups having about 1 to 10 carbon atoms). For example, there may be included combinations of triethylaluminum with

diethylaluminum ethoxide; of diethylaluminum monochloride with diethylaluminum ethoxide; of ethylaluminum dichloride with ethylaluminum diethoxide; and of triethylaluminum, diethylaluminum ethoxide and diethylaluminum chloride.

The amount of the component (B) used may be 0.1 to 1000, preferably 1 to 100, in terms of weight ratio of the component (B)/component (A).

Component (C)

The component (C) is an electron donor compound, which is used upon necessity when the combination of the components (A) with (B) as a catalyst will not produce propylene homopolymers or copolymers endowed with desired high crystallinity.

Examples of the electron donor may include oxygen-containing electron donors such as alcohols, phenols, ketones, aldehydes, carboxylic acids, esters of an organic acid or an inorganic acid, ethers, acid amides, acid anhydrides, and the like; and nitrogen-containing electron donors such as ammonia, amines, nitriles, isocyanates, and the like.

More specifically, there may be included: (a) alcohols having 1 to 18 carbon atoms, such as methanol, ethanol, propanol, pentanol, hexanol, octanol, dodecanol, octadecyl alcohol, benzyl alcohol, phenylethyl alcohol, cumyl alcohol, isopropylbenzyl alcohol and the like; (b) phenols having 6 to 25 carbon atoms which may or may not have an alkyl group, such as phenol, cresol, xylenol, ethylphenol, propylphenol, cumylphenol, nonylphenol, naphthol and the like; (c) ketones having 3 to 15 carbon atoms, such as acetone, methyl ethyl ketone, methyl isobutyl ketone, acetophenone, benzophenone and the like; (d) aldehydes having 2 to 15 carbon atoms, such as acetaldehyde, propionaldehyde, octylaldehyde, benzaldehyde, tolualdehyde, naphthaldehyde and the like; (e) organic acid esters having 2 to 20 carbon atoms, such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, diethyl phthalate, dibutyl phthalate, diheptyl phthalate, $\gamma$-butyrolactone, $\alpha$-valerolactone, coumarine, phthalide, ethylene carbonate, cellosolve acetate, cellosolve isobutyrate and cellosolve benzoate, etc.; (f) inorganic acid esters, such as phosphates, e.g. $P(OEt)_3$ and borates, e.g. $B(OEt)_3$; (g) acid halides having 2 to 15 carbon atoms, such as acetyl chloride, benzoyl chloride, toluyloic chloride, anisic chloride, phthaloyl chloride, phthaloyl isochloride and the like; (h) ethers having 2 to 20 carbon atoms, such as methyl ether, ethyl ether, isopropyl ether, butyl ether, amyl ether, tetrahydrofuran, anisole, diphenyl ether and the like; (i) acid amides, such as acetic amide, benzoic amide, toluyloic amide and the like; (j) amines, such as monomethylamine, monoethylamine, diethylamine, tributylamine, piperidine, tribenzylamine, aniline, pyridine, picoline, tetramethylethylenediamine and the like; and (k) nitriles, such as acetonitrile, benzonitrile, tolunitrile and the like.

Other examples of electron donor compounds include a silicon compound represented by the formula: $R^1_mX_nSi(OR^2)_{4-m-n}$ (wherein $R^1$ and $R^2$ are each hydrocarbyl groups, X is a hydrogen atom or a halogen atom, m and n are respectively $0 \leq m \leq 3$ and $0 \leq n \leq 3$, and yet $0 \leq (m + n) \leq 4$). $R^1$ and $R^2$ should be preferably hydrocarbyl groups having about 1 to 20 carbon atoms, preferably 1 to 10 carbon atoms). When there are a plurality of $R^1$ (i.e. m = 2 or 3), the respective $R^1$'s may be either the same or different. X is preferably chlorine, at least from economy. It is more preferred that $R^1$ be branched from the carbon atom adjacent to the silicon atom. Furthermore, it is more preferred that in $R^1$, the carbon atom adjacent to the silicon atom, that is, the carbon atom at the $\alpha$-position, be a secondary or tertiary carbon atom. It is especialy preferred that the carbon atom bonded to the silicon atom is a tertiary carbon atom. And $R^1$ is 4 to 10 carbon atoms.

Specific examples may include: $(CH_3)Si(OCH_3)_3$,
$(CH_3)Si(OC_2H_5)_3$,
$(C_2H_5)_2Si(OCH_3)_2$,
$(n\text{-}C_6H_{11})Si(OCH_3)_3$,
$(C_2H_5)Si(OC_2H_5)_3$,
$(n\text{-}C_{10}H_{21})Si(OC_2H_5)_3$,
$(CH_2=CH)Si(OCH_3)_3$,
$Cl(CH_2)_3Si(OCH_3)_3$,

$Si(OCH_3)_4$,
$Si(OC_2H_5)_3Cl$,
$(C_2H_5)_2Si(OC_2H_5)_2$,
$(C_{17}H_{35})Si(OCH_3)_3$,
$Si(OC_2H_5)_4$,
$(C_6H_5)Si(OCH_3)_3$,
$Si(OCH_3)_2Cl_2$,
$(C_6H_5)_2Si(OCH_3)_2$,
$(C_6H_5)(CH_3)Si(OCH_3)_2$,
$(C_6H_5)Si(OC_2H_5)_3$,
$(C_6H_5)_2Si(OC_2H_5)_2$,
$NC(CH_2)_2Si(OC_2H_5)_3$,
$(C_6H_5)(CH_3)Si(OC_2H_5)_2$,
$(n\text{-}C_3H_7)Si(OC_2H_5)_3$,
$(CH_3)Si(OC_3H_7)_3$,
$(C_6H_5)(CH_2)Si(OC_2H_5)_3$,

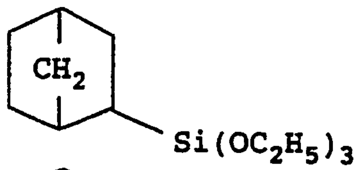 ,

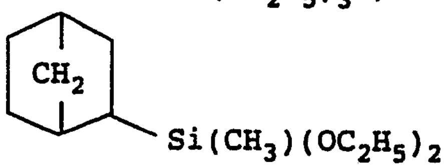 ,

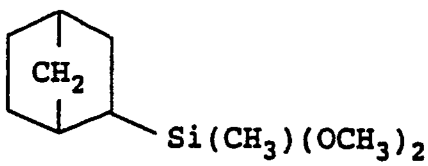 ,

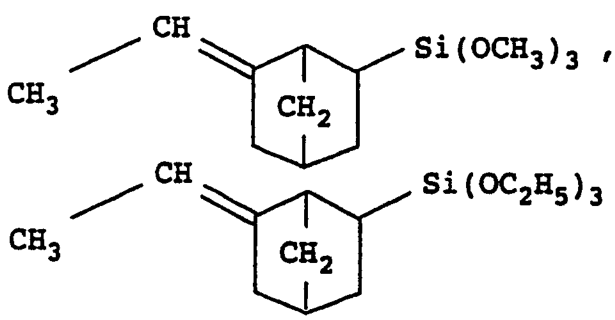 ,
,

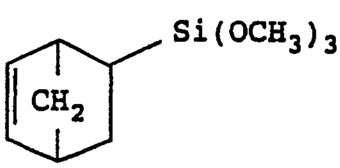 ,

$(CH_3)_3CSi(CH_3)(OCH_3)_2$,
$(CH_3)_3CSi(HC(CH_3)_2)(OCH_3)_2$,
$(CH_3)_3CSi(CH_3)(OC_2H_5)_2$,
$(C_2H_5)_3CSi(CH_3)(OCH_3)_2$,
$(CH_3)(C_2H_5)CH\text{-}Si(CH_3)(OCH_3)_2$,
$((CH_3)_2CHCH_2)_2Si(OCH_3)_2$,

$(C_2H_5)(CH_3)_2CSi(CH_3)(OCH_3)_2$,
$(c_2H_5)(CH_3)_2CSi(CH_3)(OC_2H_5)_2$,
$(CH_3)_3CSi(OCH_3)_3$,
$(CH_3)_3CSi(OC_2H_5)_3$,
$(C_2H_5)_3CSi(OC_2H_5)_3$,
$(CH_3)(C_2H_5)CHSi(OCH_3)_3$,
$(C_2H_5)(CH_3)_2CSi(OCH_3)_3$,
$(C_2H_5)(CH_3)_2CSi(OC_2H_5)_3$.

Among these electron donor compounds, preferred are aromatic esters, amines and organosilicon compounds. The quantity of electron donor compounds as Component (C) can be any suitable one, but it may be 0.1 to 1000 moles, preferably 1 to 300 moles, per mole of the titanium atom in Component (A). The electron donor compounds listed above can be used in admixture of two or more,

## Component (D)

The Component (D) in the present invention is an organometal compound whose metal atom is selected from those in the Group I, II and III of the Periodic Table except for aluminum and is not directly attached to an alkoxy group.

Typical examples of such a metal include lithium, magnesium, boron, gallium and zinc.

Typical examples of organic radicals which are attached to the metal atoms to form the organometal compounds include a hydrocarbyl group of 1 to 10 carbon atoms such as an alkyl group of 1 to 10 carbon atoms, phenyl group or phenyl groups substituted by a lower alkyl.

It is essential for the organometal compounds that at least one of the valences of the metal be satisfied by the organic radicals, but the remaining valences, if any, can be satisfied by other radicals such as a halogen atom, e.g. chlorine atom, or a hydrogen atom.

Examples of the organometal compounds include: (a) organolithium compounds, e.g. methyllithium, n-butyllithium, sec.-butyllithium, tert.-butyllithium and the like; (b) organomagnesium compounds, e.g. diethylmagnesium, ethylbutylmagnesium, dibutylmagnesium, dihexylmagnesium, ethylmagnesium chloride, ethylmagnesium bromide, butylmagnesium chloride, and the like; (c) organoboron compounds, e.g. tri(sec.-butyl)borane, triethylborane, lithium tri(sec.-butyl)borohydride, and the like; (d) organogallium compounds, e.g. trimethylgallium, triethylgallium, and the like; and (e) organozinc compounds, e.g. diethylzinc, dimethylzinc, and the like. Among these, organolithium compounds and organomagnesium compounds are preferable.

The quantity of the organometal compounds as Component (D) can be any suitable one, but it may be 0.01 to 300 moles, preferably 0.1 to 40 moles, more preferably 0.1 to 10 moles, per mole of the titanium atom in Component (A). Higher quantity of Component (D) used will, on one hand, result in lower quantity of by-products and better powder characteristics of the polymer produced, but will, on another hand, result in lower polymerization activity and lower propylene content than the purposed one in the later step of polymerization which is conducted in the presence of Component (A).

## Polymerization process

The polymerization process conducted in the presence of the above-described catalyst components, Components (A), (B), (C) and (D), Component (C) being optional, is conducted in multi-steps, and at least two steps, i.e. a former step and a later step, two steps being preferred.

### Making up of a catalyst

The catalysts in accordance with the present invention may be made up by contacting Components (A) and (B) or (A), (B) and (C) each other at once, or step-wisely or portion-wisely, within or outside a polymerization vessel.

Former step polymerization

The former step polymerization is a process wherein propylene as it is or in admixture with a small quantity of ethylene is contacted with a catalyst comprising Components (A) and (B) or Components (A), (B) and (C) at once, or step-wisely or portion-wisely, thereby to produce a homopolymer of propylene or a copolymer of propylene with ethylene of an ethylene content of no higher than 7% by weight, preferably no higher than 3.0% by weight, more preferably no higher than 0.5% by weight, in a quantity of 30 to 95% by weight, preferably 50 to 90% by weight, of the total polymer produced.

The polymers produced in the former step which contain ethylene in excess of 7% by weight will result in the total copolymers produced such that the bulk density is undesirably low and quantity of low crystalline by-product polymers is considerably high. When the polymers produced in the former step comprise less than 30% by weight of the total polymer produced, quantity of the low crystalline by-product polymers in the final copolymer is increased, too. When the polymers produced in the former step comprise more than 95% by weight of the total polymer produced, on the other hand, no advantage inherent in the present invention such as improvement in impact strength of the polymer produced inherent in block copolymers of this nature nor improvement in the spiral flow of the polymers produced which is inherent in the present invention will be attainable.

The former step of polymerization in accordance with the present invention may be conducted at a temperature of e.g. 30 to 95°C, preferably 50 to 85°C, and under a pressure of 1 to 50 $kg/cm^2 \cdot G$. It is preferable to conduct the former step in the presence of hydrogen gas or another molecular weight controlling agent so as to obtain the final polymer of a higher melt flow rate.

Addition of Component (D)

In accordance with the present invention, the later step of polymerization is conducted in the presence of Component (D).

Component (D) may thus be added to the later step of polymerization, before initiation of or during the later step polymerization, in a single batch or portion-wisely. Alternatively, Component (D) may be added to the former step and the later step polymerization Preferably, Component (D) is added after completion of the former step of polymerization and at the time of initiation of the later step of polymerization.

Later step polymerization

Except for use of Component (D), the later step polymerization is conducted, according to conventional production of propylene block copolymers, in the presence of at least portion of or preferably all of the product produced in the former step polymerization.

More particularly and typically, a mixture of propylene with ethylene is further introduced in a single batch or portion-wisely into the polymerization vessel in which the former step polymerization has taken place, thereby to produce propylene/ethylene copolymers of an ethylene content of 20 to 100% by weight, preferably 30 to 100% by weight, more preferably 30 to 70% by weight. The copolymers produced in the later step of polymerization comprise the rest of the total polymer produced, namely 5 to 70% by weight, preferably 10 to 50% by weight, of the total polymer produced.

The later step polymerization is designed for producing elastomeric polymers, and another $\alpha$-olefin such as 1-butene, 1-pentene or 1-hexene can optionally and additionally be copolymerized.

The later step polymerization may be conducted at a temperature of e.g. 30 to 90°C, preferably 50 to 80°C, and under a pressure of e.g. 1 to 50 $kg/cm^2 \cdot G$.

It is preferable to operate the former step polymerization and the later step polymerization so that the gaseous components present at the end of the former step polymerization such as propylene gas or propylene/ethylene gas and hydrogen if used are purged from the polymerization before the later step polymerization is initiated.

The later step polymerization is conducted in the presence of at least a portion of the product produced in the former step polymerization, which is still catalytically active, and the catalyst used for the former step polymerization is used for continuing polymerization in the later step polymerization. It is, however, possible to supplement Component (A), (B) and/or (C) upon necessity.

The later step polymerization may be conducted in the absence of hydrogen or another molecular weight controlling agent, but it is possible to use such.

Polymerization mode

The process for producing the copolymer according to the present invention can be practiced according to any of the batch-wise mode, the continuous mode and the semibatch-wise mode. These polymerization modes may be practiced by a method in which polymerization is carried with the monomer used itself as a polymerization medium or dispersant, a method in which polymerization is carried out in gaseous monomers without use of any polymerization medium added, a method in which polymerization is carried out in the presence of a polymerization medium or a dispersant other than the monomer itself, or a method in which polymerization is carried out in combination of these.

A preferable polymerization method is such that polymerization is carried out in the presence of a polymerization medium such as heptane whereby the advantage inherent in the present invention is obtainable at the maximum degree possible.

It is possible to preliminarily subject Component (A) or Components (A) and (B) to what is called preliminary polymerization which is conducted under milder conditions than those used for producing the block copolymers in accordance with the present invention for producing a polymer of an α-olefin in such a small quantity of 1 to 1,000 % by weight of Component (A). For the preliminary polymerization, reference can be made to, e.g. Japanese Patent Laid-Open Publication Nos. 71712/1980 and 57814/1981.

## [EXPERIMENTAL EXAMPLES]

### Example-1

[Preparation of component (A)]

Into a flask thoroughly replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95° C for 2 hours. After completion of the reaction, the temperature was lowered to 40° C, followed by addition of 48 ml of methylhydropolysiloxane (of 20 centistokes) and the reaction was carried out for 3 hours. The solid component formed was washed with n-heptane.

Subsequently into a flask thoroughly replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30° C over 30 minutes, and the reaction was carried out at 70° C for 3 hours.. After completion of the reaction, the product was washed with n-heptane. A mixture of 25 ml of n-heptane with 0.024 mole of phthaloyl chloride was added to the flask at 70° C for 30 minutes, and the reaction was carried out at 90° C for 1 hour.

After the reaction, the solid product was washed with n-heptane, and 20 ml of $SiCl_4$ was then added thereto and the reaction was carried out at 80° C for 6 hours. After the reaction, the solid product was washed with n-heptane. The solid thus obtained was found to contain 1.21% by weight of titanium.

Into a flask amply replaced in it with nitrogen was introduced 50 ml of amply purified n-heptane, and then 5 g of the solid product obtained above was introduced. Next, 1.6 ml of $(CH_3)_3CSi(CH_3)(OCH_3)_2$, 0.52 ml of $TiCl_4$, and further 3.0 g of triethylaluminum were respectively introduced and contacted at 30° C for 2 hours. After completion of the contact, the product was amply washed with n-heptane to provide a component (A), which was found to contain 3.64% by weight of titanium.

[Copolymerization of propylene]

An autoclave of 1.5 liter-capacity equipped with a stirrer was purged with propylene, to which 500 ml of amply dehydrated and deoxygenated n-heptane was introduced and then, 17 mg of the above Component (A) and 125 mg of triethylaluminum as Component (B) were introduced under propylene atmosphere.

The former step polymerization was conducted so that 200 ml of hydrogen was introduced into the autoclave, the temperature was elevated to 75° C, and propylene was fed at a constant rate of 0.917 g/min. After 3 hours, introduction of propylene was terminated and polymerization was continued at 75° C until the

pressure was 2 kg/cm$^2$•G, where the polymer produced was sampled as an intermediate polymer. The gas phase was then extracted until the pressure reached 0.2 kg/cm$^2$•G. 248 mg of n-butyllithium was then introduced, the mole ratio of n-butyllithium/Ti in Component (A) being 3/1, and propylene and ethylene were fed at constant rates of 0.133 g/min. and 0.200 g/min., respectively, at 65°C for 1.5 hours.

After the polymerization, the gas phase in the autoclave was blown off, and the slurry obtained was subjected to filtration and drying to give 156.7 g of a polymer. The filtrate obtained gave, upon drying, 1.98 g of a low crystalline by-product polymer. MFR and bulk density of the polymer obtained was 6.65 g/10 min. and 0.494 g/c.c., respectively. The sampled intermediate polymer had, upon drying, MFR of 15.6 g/10 min. The angle of rest of the polymer was 31.0°. The yield obtained was 10,400 g polymer/g-solid catalyst.

Example-2

The procedure of Example-1 was followed except for the polymerization conditions for propylene where the quantity of triethylaluminum was changed to 50 mg.

The result obtained is set forth in Table-1.

Example-3

The procedure of Example 1 was followed except for the polymerization conditions for propylene where the quantity of n-butyllithium was changed to 1.65 mg, the mole ratio of n-butyllithium/Ti in Component (A) being 2.

The result obtained is set forth in Table-1.

Comparative Example-1

The procedure of Example-1 was followed except for the polymerization conditions for propylene where no n-butyllithium was used.

The result obtained is set forth in Table-1.

Table-1

| | Component (A) | Component (B) | Component (D) (mole ratio to Ti) | Activity gPP/g Comp. (A) | MFR (g/10 min) Int. Polymer/Total Polymer | MFR estimated for EPR portion *1 | Low crystalline polymer | Bulk density | Angle of repose | Remarks |
|---|---|---|---|---|---|---|---|---|---|---|
| | (mg) | (mg) | | | | | (wt%) | (g/cc) | (deg.) | |
| Example-1 | 17 | 125 | n-BuLi 3.5 | 10,400 | 15.6/6.65 | 0.053 | 1.25 | 0.494 | 31.0 | |
| Example-2 | 17 | 75 | n-BuLi 3.5 | 10,100 | 24.7/8.29 | 0.019 | 1.92 | 0.492 | 30.1 | |
| Example-3 | 17 | 125 | n-BuLi 2.3 | 11,100 | 15.1/7.29 | 0.12 | 2.34 | 0.489 | 31.0 | |
| Comp.Ex-1 | 17 | 125 | -- | 11,500 | 18.9/10.3 | 0.33 | 5.35 | 0.300 | 48.3 | tacky |

*1 EPR portion corresponds to the polymer produced in the later step of polymerizeration.

Examples -4 to 6, comp. Examples -2, -3

The procedure of Example-1 was followed except for the polymerization conditions where n-butyllithium was replaced by those set forth in Table-2 as Component (D).

The results obtained were set forth in Table-2.

Table-2

| | | | Component (D) | | | MFR (g/10 min.) | | | | | |
|---|---|---|---|---|---|---|---|---|---|---|---|
| | Component (A) | Component (B) | Type | Mole ratio to Ti | Activity gPP/g Comp. (A) | Int. Polymer/Total Polymer | Estimated for EPR portion | Low crystalline polymer | Bulk density | Angle of repose | Remarks |
| | (mg) | (mg) | | | | | | (wt%) | (g/cc) | (deg.) | |
| Example-4 | 17 | TEA 125 | Butylethylmagnesium | 3.1 | 10,100 | 16.3/7.89 | 0.129 | 2.60 | 0.485 | 31.8 | |
| Example-5 | 17 | 125 | Butylmagnesium bromide | 3.1 | 10,800 | 18.4/8.58 | 0.114 | 2.34 | 0.465 | 33.9 | |
| Example-6 | 15 | 125 | Diethylzinc | 10.0 | 11,900 | 15.9/9.02 | 0.36 | 4.70 | 0.473 | 35.0 | less tacky |
| Comp. Ex.-2 | 17 | 125 | Triethylaluminum | 60.0 | 11,000 | 24.8/14.3 | 0.93 | 4.89 | 0.400 | 39.5 | much tacky |
| Comp. Ex.-3 | 17 | 125 | Diethoxymagnesium | 10.0 | 10,300 | 19.8/10.8 | 0.35 | 5.21 | 0.401 | 43.9 | much tacky |

Example-7

[Preparation of component (A)]

Into a flask amply replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask amply replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30 °C over 30 minutes, and the reaction was carried out at 70 °C for 3 hours. After completion of the reaction, the product was washed with n-heptane. Then, a solution of 0.55 g of diphenylmethanol in 25 ml of toluene was introduced to the flask at 50 °C for 30 min. and was caused to react at 90 °C for 3 hours. After the reaction, the product was washed with n-heptane. Then, 25 ml of $TiCl_4$ was added and was caused to react at 90 °C for 2 hours. After decantation, further 25 ml of $TiCl_4$ was added and was caused to react at 90 °C for 2 hours. After the reaction, the product was washed with n-heptane, and then 0.14 ml (1 mM) of 2-ethoxyethyl acetate ($CH_3COOC_2H_4OC_2H_5$) was added and was caused to react at 90 °C for 2 hours. After the reaction, the product was washed with heptane to give Component (A), which was found to contain 3.24% by weight of Ti.

[Copolymerization of propylene]

The procedure of Example-1 was followed except for the use of 20 mg of Component (A) above, 125 mg of triethylaluminum as Component (B), 53.6 mg of diphenyldimethoxysilane, the mole ratio of (C)/(B) being 0.2, and 1.73 mg of n-butyllithium as Component (D), the mole ratio of (D)/Ti in (A) being 2.

The results obtained are set forth in Table-3.

Comparative Example-4

The procedure of Example-7 was followed except for not using n-butyllithium as Component (D).

The result obtained is set forth in Table-3.

Example 8

[Preparation of component (A)]

Into a flask amply replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried out at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask amply replaced in it with nitrogen was introduced 50 ml of n-heptane purified similarly as described above, and the solid component synthesized above was introduced in an amount of 0.24 mol as calculated on Mg atom.

Then, 0.53 mole of $SiCl_4$ was introduced at 15 °C in a single batch, and was caused to react at 15 °C for 2 hours and then at 90 °C for 2 hours. After the reaction, the product was washed with n-heptane. At a temperature of 30 °C, 0.53 mole of $SiCl_4$ was added and dispersed, 15 ml of $Ti(OBu)_4$ was dropped for 30 minutes and caused to react at 90 °C for 2 hours. After the reaction, the product was washed with n-heptane to give Component (A), which was found to contain 4.53% by weight of Ti.

[Copolymerization of propylene]

The procedure of Example-1 was followed except for the use of 20 mg of Component (A) above, 125 mg of triethylaluminum as Component (B), 8.85 mg of tert.- butyldimethoxysilane, the mole ratio of (C)/(B) being 0.05, 12.1 mg of n-butyllithium as Component (D), the mole ratio of (D)/Ti in (A) being 10.

The result obtained is set forth in Table-3.

Comparative Example-5

The procedure of Example-8 was followed except for not using n-butyllithium as Component (D).

The result obtained is set forth in Table-3.

In these Tables, the "MFR estimated for EPR portion" was determined according to the following equation.

$$\text{MFR estimated for EPR portion} = \exp \frac{A\ln(\text{MFR-P}) - a_1 \ln(\text{MFR-1})}{a_2}$$

where

A: The quantity of the polymer produced;

$a_1$ : The quantity of the polymer produced in the former step of polymerization, which polymer may be called "intermediate polymer". The quantity is an estimation from the quantities of the monomer fed, dissolved in the solvent and remaining in the gas phase;

$a_2$: The quantity of the polymer produced in the later step of polymerization (estimated);

MFR-P: MFR of the polymer produced;

MFR-1: MFR of the intermediate polymer sampled at the end of the former step of polymerization.

Table-3

| | Component (A) | Component (B) | Component (C) | Component (D) | Activity gPP/g Comp. (A) | MFR (g/10 min.) Int. Polymer/Total Polymer | MFR (g/10 min.) Estimated for EPR portion | Low crystalline polymer | Bulk density | Angle of repose | Remarks |
|---|---|---|---|---|---|---|---|---|---|---|---|
| | (mg) | (mg) | Type/mg | Type/Mole ratio to Ti | | | | (wt%) | (g/cc) | (deg.) | |
| Example-7 | 20 | TEA 125 | Diphenyldimethoxysilane 53.6 | Butyllithium 2.0 | 9,350 | 19.9/8.72 | 0.081 | 1.58 | 0.501 | 31.0 | |
| Comp. Ex.-4 | 20 | 125 | " 53.6 | None | 9,500 | 18.8/9.08 | 0.146 | 2.32 | 0.493 | 34.3 | much tacky |
| Example-8 | 20 | TEA 125 | t-Butylmethyldimethoxysilane 8.8 | Butyllithium 10.0 | 9,010 | 24.3/8.82 | 0.028 | 2.31 | 0.488 | 32.2 | |
| Comp. Ex-5 | 20 | 125 | " 8.8 | None | 9,600 | 21.5/9.03 | 0.066 | 4.88 | 0.331 | 48.8 | much tacky |

## Claims

1. An improved process for producing a propylene block copolymer wherein propylene and ethylene are polymerized in multiple steps over a Ziegler type catalyst comprising a Component (A) and a catalyst Component (B) and optionally a catalyst Component (C), all given hereinbelow, so that a crystalline homopolymer of propylene or a copolymer of propylene with ethylene of an ethylene content of no higher than 7% by weight is produced in a former step and a copolymer of propylene with ethylene in a mole ratio of propylene to ethylene of 0/100 to 80/20 in a later step in the presence of at least a portion of the product produced in the former step, the improvement comprising use of a Component (D) given hereinbelow in the later step:

Component (A) which is a solid component comprising titanium, magnesium and a halogen as an essential components and optionally an electrondonor compound;

Component (B) which is an organoaluminum compound;

Component (C) which is an electron donor compound; and

Component (D) which is an organometal compound of a metal other than aluminum in the Group I, II or III of the Periodic Table with a proviso that organometal compounds having an alkoxy group attached directly to the metal are excluded.

2. The process as claimed in claim 1 wherein the polymerization is conducted in two steps.

3. The process as claimed in claim 1 wherein the quantity of the Component (D) used is 0.01 to 3000 moles per mole of the titanium atom in the Component (A) used.

4. The process as claimed in claim 1 wherein the quantity of the Component (D) is 0.1 to 40 moles per mole of the titanium atom in the Component (A) used.

5. The process as claimed in claim 1 wherein the quantity of the Component (D) is 0.1 to 10 moles per mole of the titanium atom in the Component (A) used.

6. The process as claimed in claim 1 wherein the Component (D) is an organometal compound of a metal of a group selected from the group consisting of lithium, magnesium, boron, gallium and zinc.

7. The process as claimed in claim 6 wherein the organometal compound has at least one hydrocarbyl group having 1 to 10 carbon atoms attached to the metal atom.

8. The process as claimed in claim 6 wherein the organometal compound is an alkyllithium having 1 to 10 carbon atoms in the alkyl group.

9. The process as claimed in claim 6 wherein the organometal compound is selected from the group consisting of a dialkylmagnesium having 1 to 10 carbon atoms in each of the alkyl groups and an alkylmagnesium halide having 1 to 10 carbon atoms in the alkyl group.

10. The process as claimed in claim 1 wherein the electron donor compound in the component (A) is an essential component.

11. The process as claimed in claim 10 wherein the electron donor compound inthe component (A) is one ormore compound selected from the group of organic acid esters, inorganic esters and organic acid halides.

12. The process as claimed in claim 1 whereinthe component (C) is an electron donor compound selected from the group of aromatic esters, amines and organosilicon compounds.

13. The process as claimed in claim 1 wherein the polymerization is carried out in the presence of a polymerization medium.